(19) Europäisches Patentamt / European Patent Office / Office européen des brevets

(11) **EP 2 166 306 B1**

(12) **FASCICULE DE BREVET EUROPEEN**

(45) Date de publication et mention
de la délivrance du brevet:
**04.01.2017 Bulletin 2017/01**

(51) Int Cl.:
***G01B 17/02*** (2006.01)　　　***G21C 17/06*** (2006.01)
***G01N 29/26*** (2006.01)　　　***G01N 29/44*** (2006.01)
***G01N 29/32*** (2006.01)

(21) Numéro de dépôt: **09171087.1**

(22) Date de dépôt: **23.09.2009**

(54) **Dispositif et procédé de contrôle de dimensions d'une gaine d'un crayon d'une grappe de commande pour un coeur de réacteur nucléaire**

Vorrichtung und Verfahren zum Prüfen von Abmessungen einer Kernbrennstoffhülle eines Kernreaktorsteuerstabbündels

Device and method for controlling the dimensions of a fuel rod cladding tube of a nuclear fuel control cluster in a nuclear reactor

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.09.2008 FR 0856408**

(43) Date de publication de la demande:
**24.03.2010 Bulletin 2010/12**

(73) Titulaire: **Cegelec NDT-PSC**
**Société par actions simplifiée**
**26300 Bourg-de-Péage (FR)**

(72) Inventeurs:
• **MONTERO LOPEZ, Manuel**
**07130, SAINT PERAY (FR)**
• **BLACHON, Pierre**
**38590, SAINT ETIENNE DE SAINT GEOIRS (FR)**

(74) Mandataire: **Vallée-Thiollier, Clémence-Olivia Laure Marie**
**LLR**
**11 boulevard de Sébastopol**
**75001 Paris (FR)**

(56) Documents cités:
EP-A- 0 716 301　　EP-B- 0 812 459
JP-A- 11 101 891　　US-A- 3 828 609
US-A- 4 502 330　　US-A1- 2004 255 677

## Description

La présente invention concerne en particulier le domaine technique du contrôle d'un crayon d'une grappe de commande pour un coeur d'un réacteur nucléaire. Elle a plus particulièrement pour objet un procédé et un dispositif de contrôle de dimensions d'un élément tubulaire cylindrique, appelé gaine, notamment pour un tel crayon et ce dans le but de contrôler l'état d'usure de la gaine.

De façon connue en soi, un crayon tel que ci-dessus comprend des pastilles réalisées dans un matériau absorbant les neutrons, empilées les unes sur les autres et entourées d'une gaine métallique de forme générale de révolution autour d'un axe. Une grappe de commande est formée classiquement par un groupe de crayons juxtaposés et montés parallèlement entre eux et portés par des bras d'une pièce de manutention désignée généralement par le terme araignée. La grappe est destinée à être introduite dans un assemblage de combustible d'un coeur du réacteur nucléaire. En particulier, les crayons de la grappe sont destinés à être insérés plus ou moins profondément dans des tubes de l'assemblage combustible permettant le guidage de ces crayons, ceci afin de faire varier la vitesse de la réaction nucléaire et ainsi la puissance du réacteur.

Il est nécessaire de contrôler l'état de la gaine des crayons pour déterminer suffisamment tôt d'éventuels défauts, et notamment des risques de percement de la gaine métallique liés aux contraintes subies par exemple lors de l'introduction des crayons dans les tubes de guidage ou encore des risques de gonflement de la gaine métallique consécutifs à des échauffements et irradiations de la gaine lors du fonctionnement du réacteur nucléaire, pouvant alors gêner, voire bloquer son déplacement dans les tubes de guidage.

On connaît déjà dans l'état de la technique, notamment du document EP 0 812 459, un procédé de contrôle des crayons d'une grappe par exploration ultra-sonore et par courants de Foucault. Dans ce procédé, on place la gaine dans un milieu approprié et on localise des emplacements de manque de matière ou de gonflement grâce à l'analyse d'un contour de la périphérie d'une gaine d'un crayon par sondage ultra-sonore. Cette analyse permet de déterminer les écarts de ce contour par rapport à un contour nominal de la gaine.

Toutefois, ce procédé de contrôle est défaillant lorsqu'il s'agit de mesurer avec précision des amincissements prononcés de la gaine dans certaines zones d'usure de cette dernière.

D'autres dispositifs et procédés de contrôle de dimensions de tubes sont connus des documents EP 0 716 301 A, US 3 828 609 A, US 2004/255677 A1, et US 4 502 330 A.

L'invention a pour but notamment de remédier à cet inconvénient et de proposer un dispositif de contrôle de dimensions de la gaine permettant d'obtenir des mesures fiables d'amincissements de la gaine, mêmes lorsqu'ils sont très prononcés.

A cet effet, l'invention a notamment pour objet un dispositif de contrôle de dimensions d'un élément tubulaire cylindrique, appelé gaine, notamment une gaine de crayon d'une grappe de commande pour un coeur de réacteur nucléaire, caractérisé en ce qu'il comprend des premiers moyens à ultra-son d'émission-réception d'une première onde ultra-sonore le long d'un premier trajet comportant une partie incidente perpendiculaire à un axe de référence et des deuxièmes moyens à ultra-son d'émission-réception d'une deuxième onde ultra-sonore le long d'un deuxième trajet comportant une partie incidente perpendiculaire à l'axe de référence et alignée avec la partie incidente du premier trajet, les sens de propagation des première et deuxième ondes étant opposés le long des parties incidentes.

Le dispositif comprend des premiers et deuxièmes moyens à ultra-son comprenant respectivement des première et deuxième sondes à ultra-son, ainsi que des moyens différenciant les temps de propagation des première et deuxième ondes respectivement entre chacune des première et deuxième sondes et l'axe de référence, de façon que le temps de propagation de la première onde ultra-sonore selon le premier trajet soit plus long que le temps de propagation de la deuxième onde selon le deuxième trajet.

Grâce à la disposition particulière relative des premier et deuxième trajets des première et deuxième ondes ultra-sonores, cette disposition étant définie par l'agencement relatif des premiers et deuxièmes moyens à ultra-son, il est possible de déterminer avec une grande précision une épaisseur en n'importe quel point de la gaine même en cas d'usure prononcée de cette dernière. L'invention tire profit du fait que la probabilité pour que la gaine soit excessivement amincie en deux points diamétralement opposés est très faible.

Ainsi, dans une position de contrôle de la gaine dans laquelle l'axe de révolution de la gaine coïncide avec l'axe de référence du dispositif, il est toujours possible de mesurer au moins une des épaisseurs ainsi que le diamètre extérieur de la gaine par analyse des ondes ultra-sonores reçues par les moyens à ultra-son après réflexion de ces dernières sur la gaine en chacun des deux points diamétralement opposés. Par conséquent, lorsqu'une des épaisseurs n'est pas mesurable par simple analyse des ondes réfléchies, il est alors possible de la déterminer par une relation mathématique ayant pour paramètres des diamètres extérieur et intérieur de la gaine et l'autre des épaisseurs qui est mesurée par l'analyse directe des ondes ultra-sonores reçues après réflexion sur la gaine.

Un dispositif selon l'invention peut comprendre en outre l'une ou plusieurs des caractéristiques selon lesquelles :

- les moyens de différenciation comprennent des moyens de différenciation des longueurs des premier et deuxième trajets ;

- le dispositif comprenant des moyens de traitement de signaux électriques, les première et deuxième sondes sont destinées à être raccordées en parallèle aux moyens de traitement ;
- le dispositif comprend des moyens formant générateur d'impulsions électriques communs aux premiers et deuxièmes moyens à ultra-son, dans lequel les première et deuxième sondes sont destinées à être raccordées en parallèle aux moyens formant générateur ;
- le dispositif comprend des troisièmes moyens à ultra-son d'émission-réception d'une troisième onde ultra-sonore le long d'un troisième trajet comprenant une partie incidente sensiblement parallèle à l'axe de référence et une partie rétro-réfléchie coïncidant avec la partie incidente ;
- les moyens formant générateur d'impulsions électriques et les moyens de traitement de signaux électriques sont communs aux premiers à troisièmes moyens à ultra-son et les troisièmes moyens comprennent une troisième sonde à ultra-son destinée à être raccordée en parallèle avec les première et deuxième sondes à ultra-son aux moyens formant générateur et aux moyens de traitement ;
- au moins les premiers et deuxièmes moyens à ultra-son sont portés par un support commun, le dispositif comprenant en outre des moyens de déplacement du support en rotation autour de l'axe de référence.

L'invention a encore pour objet un procédé de contrôle de dimensions d'un élément tubulaire cylindrique, appelé gaine, notamment une gaine de crayon d'une grappe de commande pour un coeur de réacteur nucléaire, la gaine ayant une forme générale de révolution autour d'un axe, dans lequel on place la gaine dans un milieu liquide approprié, appelé milieu de contrôle, caractérisé en ce que :

- on utilise un dispositif de contrôle selon l'invention dans lequel on place les premiers et deuxièmes moyens à ultra-son dans le milieu de contrôle,
- on place la gaine dans le milieu de contrôle de façon à faire coïncider sensiblement l'axe de révolution avec l'axe de référence,
- on mesure, en deux points diamétralement opposés, les deux épaisseurs diamétralement opposées de la gaine par analyse des ondes ultra-sonores reçues par les premiers et seconds moyens à ultra-son après réflexion de ces ondes sur la gaine, ces ondes ultra-sonores étant émises simultanément par les premiers et seconds moyens à ultra-son.

Un procédé selon l'invention peut en outre comporter l'une ou plusieurs des caractéristiques selon lesquelles :

- préalablement à la mise en place de la gaine dans le milieu de contrôle ou après retrait de cette gaine du milieu de contrôle, on mesure la longueur Lo du trajet des ondes ultra-sonores entre les première et deuxième sondes et on déduit un diamètre extérieur $\Phi$ext de la gaine entre les deux points diamétralement opposés à partir de la longueur du trajet et de l'analyse des ondes ultra-sonores reçues par les premiers et seconds moyens à ultra-son après réflexion de ces ondes sur la gaine ;
- lorsque l'analyse des ondes ultra-sonores reçues par les premiers moyens à ultra-son ne permet pas d'aboutir à la mesure de e1, on déduit e1 par la relation suivante : e1 = $\Phi$ext - $\Phi$int-e2 où $\Phi$int est un diamètre intérieur de la gaine ;
- on tient compte, pour la mesure du diamètre extérieur $\Phi$ext, des variations de température du milieu de contrôle en mesurant le temps de propagation d'une troisième onde ultra-sonore dans le milieu, cette troisième onde étant émise par les troisièmes moyens à ultra-son le long respectivement du troisième trajet et étant reçue par les troisièmes moyens ;
- on convertit au moins les première et deuxième ondes reçues en des premier et deuxième signaux électriques et on reçoit les premier et deuxième signaux électriques sur une voie commune de traitement de signaux électriques ;
- on déplace le dispositif de contrôle d'une paire de points diamétralement opposés à une autre paire de points diamétralement opposés par rotation autour de l'axe de référence et/ou on déplace la gaine verticalement par translation parallèlement à cet axe.

L'invention sera mieux comprise à la lecture de la description qui va suivre, donnée uniquement à titre d'exemple et faite en se référant aux dessins dans lesquels :

- la figure 1 est une vue schématique en élévation d'un dispositif de contrôle selon l'invention en présence d'un crayon ;
- la figure 2 est une vue schématique en élévation du dispositif de la figure 1 en l'absence du crayon ;
- la figure 3 est une vue schématique en élévation du dispositif des figures 1 et 2 décalée de 90° ;
- la figure 4 est une vue schématique de dessus du dispositif des figures précédentes représentant les positions relatives de trois sondes à ultra-son ;
- la figure 5 est un graphique représentant une courbe d'évolution d'un signal électrique produit par le dispositif des figures 1 à 3 en fonction du temps.

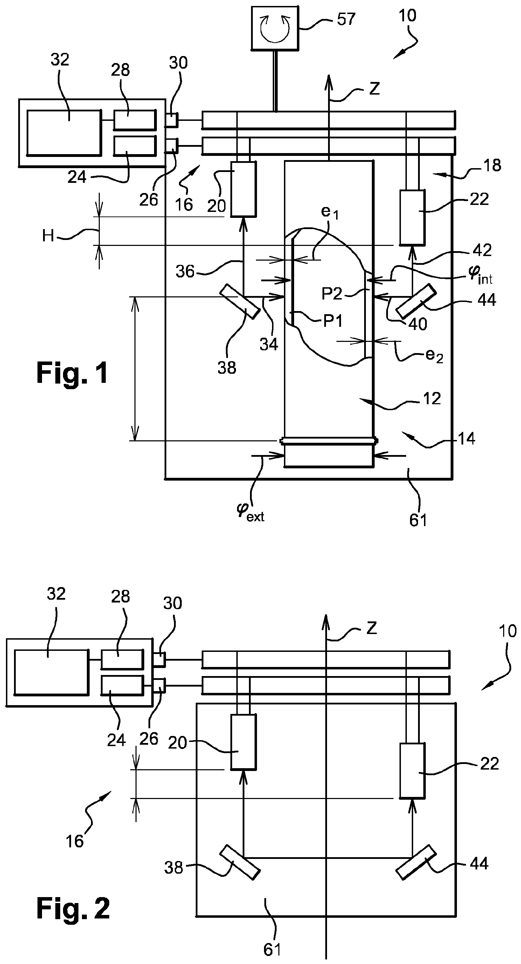

On a représenté sur la figure 1 un dispositif de contrôle selon l'invention. Ce dispositif de contrôle est désigné par la référence générale 10. Dans l'exemple illustré, ce dispositif 10 est adapté au contrôle de dimensions d'un élément tubulaire cylindrique 12, appelé gaine, d'un crayon 14 d'une grappe de commande (non représentée). Cette grappe est destinée de façon classique à être insérée dans un assemblage de combustible d'un coeur de réacteur nucléaire.

La gaine 12 peut avoir une longueur d'environ cinq mètres.

Le dispositif 10 comprend des premiers 16 et deuxièmes 18 moyens à ultra-son d'émission/réception respectivement d'une première onde ultra-sonore et d'une deuxième onde ultra-sonore. Les premiers et deuxièmes moyens 16 et 18 comprennent respectivement des première 20 et deuxième 22 sondes à ultra-son classiques.

Par exemple, chaque sonde 20 ou 22 est du type à transduction électro-acoustique et comprend ainsi un élément piézoélectrique (non représenté) destiné à produire des ondes ultra-sonores sous l'effet d'une impulsion électrique. Chaque sonde à ultra-son 20 ou 22 comprend ainsi des moyens d'émission (non représentés) d'une onde ultra-sonore à partir d'un signal électrique impulsionnel par excitation de l'élément piézo-électrique et des moyens de réception (non représentés) d'une onde ultra-sonore pour sa transformation par la sonde 20 ou 22 en un signal électrique.

Le dispositif 10 comprend également des moyens 24 formant générateur d'impulsions, ces moyens 24 étant de préférence communs aux deux sondes 20 et 22. Ainsi, les deux sondes 20 et 22 sont reliées en parallèle à une sortie commune 26 des moyens 24.

De préférence, le dispositif 10 comprend des moyens 28 de traitement de signaux électriques communs aux deux sondes 20 et 22. Ainsi, les moyens de réception des deux sondes 20 et 22 sont raccordés en parallèle à une entrée commune 30 des moyens de traitement 28.

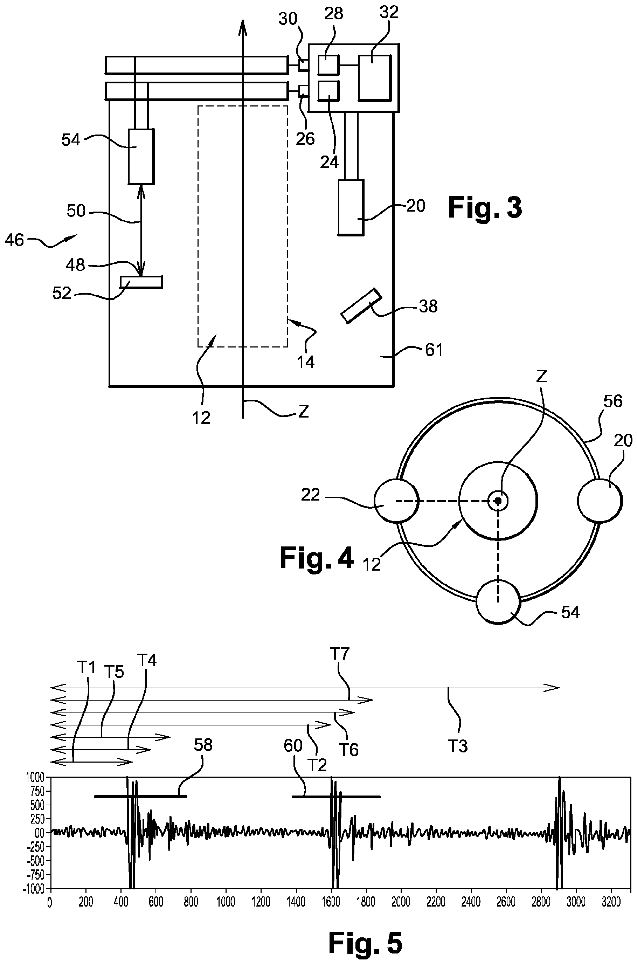

Afin d'analyser les signaux électriques émis par les moyens de réception des sondes 20 et 22, les moyens de traitement 28 sont reliés de façon classique à un écran 32 d'affichage tel que celui représenté sur la figure 5.

Les premiers moyens à ultra-son 16 sont destinés à émettre une première onde ultra-sonore le long d'un premier trajet comportant au moins une partie incidente 34 perpendiculaire à un axe de référence Z du dispositif 10.

De préférence, afin de réduire notamment l'encombrement du dispositif 10 selon une direction perpendiculaire à l'axe de référence Z d'une part, la première sonde 20 est orientée par rapport à l'axe Z de manière à ce qu'elle émette la première onde selon une première partie 36 du premier trajet de direction sensiblement parallèle à l'axe Z. D'autre part, les premiers moyens à ultra-son 16 comprennent des premiers moyens 38 de réflexion de la première onde, destinés à réfléchir à angle droit la première onde selon une deuxième partie 34 du premier trajet correspondant à la partie incidente perpendiculaire à l'axe de référence Z.

De façon analogue, les deuxièmes moyens à ultra-son 18 sont destinés à émettre une deuxième onde ultra-sonore le long d'un deuxième trajet comportant au moins une partie incidente 40 perpendiculaire à l'axe de référence Z.

De préférence et de façon similaire aux premiers moyens 16 d'une part, la deuxième sonde 22 est également orientée par rapport à l'axe Z de manière à ce qu'elle émette la deuxième onde selon une première partie 42 du deuxième trajet de direction sensiblement parallèle à l'axe Z. D'autre part, les deuxièmes moyens à ultra-son 18 comprennent en outre des deuxièmes moyens 44 de réflexion à angle droit de la deuxième onde ultra-sonore selon une deuxième partie 40 du deuxième trajet correspondant à la partie incidente perpendiculaire à l'axe de référence Z.

Plus particulièrement, les deux parties incidentes 34 et 40 des deux trajets sont alignées et les sens de propagation des première et deuxième ondes sont opposés dans ces parties incidentes 34 et 40. A cet effet, comme cela est représenté sur la figure 5, les premiers 38 et deuxièmes 44 moyens de réflexion sont disposés symétriquement par rapport à un plan comprenant l'axe Z.

Afin d'éviter une superposition des signaux électriques émis par les sondes 20 et 22 à destination des moyens de traitement 28 des signaux électriques, le dispositif 10 comprend des moyens différenciant les temps de parcours des première et deuxième ondes respectivement entre chacune des première 20 et deuxième 22 sondes et l'axe de référence Z.

Dans cet exemple, les moyens de différenciation comprennent des moyens de différenciation des longueurs des premier et deuxième trajets. Ainsi, comme cela est illustré sur la figure 1, la première sonde 20 est décalée d'une distance H par rapport à la deuxième sonde 22 selon une direction verticale sensiblement parallèle à l'axe de référence Z de manière à ce que la première partie 36 du premier trajet soit plus longue que la première partie 42 du deuxième trajet. De ce fait, le temps de propagation de la première onde ultra-sonore selon le premier trajet est plus long que le temps de propagation de la deuxième onde selon le deuxième trajet.

De préférence, comme cela est représenté sur la figure 3, le dispositif 10 comprend des troisièmes moyens 46 à ultra-son d'émission/réception d'une troisième onde ultra-sonore le long d'un troisième trajet. Ce troisième trajet comprend une partie incidente 48 sensiblement parallèle à l'axe de référence Z et une partie réfléchie 50 coïncidant avec la partie incidente 48. Ces troisièmes moyens à ultra-son 46 comprennent également des troisièmes moyens 52 de réflexion de la troisième onde selon une direction réfléchie coïncidant avec la direction incidente.

Les moyens formant générateur 24 communs aux premiers et deuxièmes moyens à ultra-son 16 et 18 sont également communs aux troisièmes moyens à ultra-son 46 qui comprennent une troisième sonde à ultra-son 54 destinée à être raccordée en parallèle avec les première 20 et deuxième 22 sondes à ultra-son à la sortie commune 26 des moyens 24 formant générateur d'impulsions électriques.

Par ailleurs, comme cela est représenté sur la figure 4, au moins deux des moyens à ultra-son, de préférence les trois moyens à ultra-son 16, 18 et 46, sont portés par un support commun 56. Dans l'exemple décrit, le support 56 est annulaire autour de l'axe de référence Z et porte les trois sondes 20, 22 et 54 de manière à ce que les première et deuxième sondes 20 et 22 soient diamétralement opposées et à ce que la troisième sonde 54 soit positionnée entre les deux sondes 20 et 22 en étant espacée angulairement de sensiblement 90° de chacune des première et deuxièmes sondes 20 et 22.

Afin de contrôler la gaine 12 sur sa périphérie, le dispositif 10 comprend de préférence des moyens 57 de déplacement du support 56 en rotation autour de l'axe de référence Z. Ces moyens de déplacement 57 sont schématisés sur la figure 1. Par ailleurs, des moyens de déplacement (non représentés) de la gaine 12 en translation parallèlement à l'axe Z permettent un contrôle de la gaine 12 sur toute sa hauteur.

On a représenté sur la figure 5, l'évolution temporelle de l'intensité d'un signal électrique reçu par les moyens de traitement 28, visualisée sur l'écran 32. L'écran 32 comprend un repère comprenant en abscisse le temps et en ordonnée l'intensité du signal électrique reçue en entrée 30 des moyens de traitement 28 selon des échelles prédéfinies. L'écran 32 comprend également des éléments graphiques, tels que des première 58 et deuxième 60 fenêtres de pré-sélection de parties remarquables du signal électrique à analyser.

Ainsi, on voit dans la première fenêtre 58, un premier pic d'intensité principal du signal électrique au temps T1, ainsi que des pics d'intensité secondaires aux temps T4 et T5 et, dans la deuxième fenêtre 60, un deuxième pic d'intensité principal au temps T2 et des pics d'intensité secondaires aux temps T6 et T7. Enfin, on voit au temps T3 un troisième pic d'intensité principal.

On va maintenant décrire les principales étapes d'un procédé de contrôle de la gaine 12.

Initialement, on place la gaine 12 dans un milieu liquide approprié, appelé milieu de contrôle 61. Ce milieu de contrôle 61 est par exemple un liquide, notamment de l'eau, tel que celui contenu dans une piscine de réacteur nucléaire.

On utilise lors de ce procédé le dispositif de contrôle 10. A cet effet, on place les premiers 16, deuxièmes 18, et troisièmes 46 moyens à ultra-son dans le milieu de contrôle 61. La gaine 12 est positionnée dans le milieu de contrôle de façon à faire coïncider son axe de révolution avec l'axe de référence Z.

Dans cette position relative du dispositif 10 et de la gaine 12, les ondes ultra-sonores émises respectivement par les premiers 16 et deuxièmes 18 moyens à ultra-son rencontrent la gaine 12 lors de leur propagation le long de leurs trajets respectifs respectivement en des points P1 et P2 diamétralement opposés et sont réfléchies par cette gaine 12 respectivement vers les premiers 16 et deuxièmes 18 moyens à ultra-son.

Sur la figure 1, le support 56 est disposé dans une position de contrôle d'une zone médiane de la gaine 12 du crayon 14.

Etant raccordées à une sortie commune 26 des moyens formant générateur 24, les trois sondes à ultra-son 20, 22 et 54 émettent simultanément des première, deuxième et troisième ondes ultra-sonores selon respectivement les premier, deuxième et troisième trajets.

On mesure alors, aux deux points diamétralement opposés P1 et P2, les deux épaisseurs diamétralement opposées e1 et e2 de la gaine 12 par analyse des ondes ultra-sonores reçues par les premiers 16 et deuxièmes 18 moyens à ultra-son après réflexion de ces ondes sur la gaine 12.

Ces ondes ultra-sonores reçues par les premiers 16 et deuxièmes 18 moyens à ultra-son sont converties par ces derniers en des signaux électriques qui sont reçus sur une voie commune de traitement de signaux électriques correspondant à l'entrée 30 des moyens de traitement 28. Grâce à la différentiation des longueurs des premier et deuxième trajets, bien que les ondes ultra-sonores soient émises simultanément par les moyens à ultra-son, elles ne sont pas reçues simultanément par les moyens de réception des sondes à ultra-son 20 et 22 respectives. Par conséquent, les éléments remarquables de chacun des signaux électriques générés par les sondes 20 et 22 ne sont pas superposés temporellement sur le graphique affiché par l'écran 32. De préférence, la longueur du troisième trajet est choisie de manière à différer des première et deuxième longueurs respectivement des premier et deuxième trajets.

Sur le graphique de la figure 5, on détecte des pics secondaires aux temps T4 et T5 dans la première fenêtre 58, coïncidant avec la réception de la deuxième onde par la deuxième sonde 22 après une ou plusieurs réflexions à l'intérieur de la gaine 12.

La différence entre ces deux temps T4 et T5 correspond à une durée proportionnelle à la deuxième épaisseur e2. Ainsi, connaissant la vitesse de propagation des ondes ultra-sonores dans la gaine 12, il est possible d'en déduire la deuxième épaisseur e2. Il en va de même des pics secondaires T6 et T7 qui permettent de déduire la première épaisseur e1.

On notera que, dans le cas de l'exemple, les épaisseurs e1 et e2 sont de l'ordre du millimètre.

Toutefois, il se peut que l'analyse des ondes ultra-sonores reçues par les premiers moyens à ultra-son 16 (ou par les seconds moyens à ultra-son 18) ne permette pas d'aboutir à la mesure de e1 (ou de e2). Ceci peut se produire lorsque la gaine 12 comprend une zone d'usure très importante dans laquelle la gaine 12 est tellement amincie que la durée séparant les pics secondaires correspondant aux ondes réfléchies à l'intérieur de la gaine 12 est trop courte pour permettre une discrimination des pics secondaires entre eux par simple analyse du signal électrique obtenu.

Dans ce cas, on déduit l'épaisseur e1 au moyen d'une relation mathématique ayant pour paramètres les diamètres extérieur Φext et intérieur Φint de la gaine ainsi que l'autre épaisseur e2 pouvant être mesurée directement par analyse du signal électrique affiché à l'écran 32.

On déduit tout d'abord le diamètre extérieur Φext de la gaine 12 entre les deux points diamétralement P1 et P2 opposés à partir, d'une part, de la longueur Lo du trajet des ondes ultra-sonores entre les première 20 et deuxième 22 sondes (ce trajet est représenté sur la figure 2) et d'autre part, de l'analyse des ondes ultra-sonores reçues par les premiers 16 et seconds 18 moyens à ultra-son après réflexion de ces ondes sur la gaine 12.

Cette longueur Lo est mesurée préalablement à la mise en place de la gaine 12 dans le milieu de contrôle 61 ou après retrait de cette gaine 12 du milieu de contrôle 61.

Puis, par analyse des ondes ultra-sonores précédemment reçues par les premiers 16 et seconds 18 moyens à ultra-son, on mesure également des première L1 et deuxième L2 longueurs respectivement des premier et deuxième trajets des première et deuxième ondes ultra-sonores entre la première sonde 20 et le premier point P1 d'une part et la deuxième sonde 22 et le deuxième point P2 d'autre part.

Ainsi, grâce au graphique de la figure 5, on détecte dans la première fenêtre 58 un premier pic au temps T1 coïncidant avec la réception de la deuxième onde par la deuxième sonde 22 après une seule réflexion sur le point P2 de la surface externe de la gaine 12 et on détecte dans la deuxième fenêtre 60 un deuxième pic principal au temps T2 coïncidant avec la réception de la première onde par la première sonde 20 après une seule réflexion sur le point P1 diamétralement opposé au point P2. Cette analyse permet ainsi d'en déduire les longueurs L1 et L2 qui sont proportionnelles aux durées T1 et T2.

On déduit alors un diamètre extérieur Φext de la gaine 12 entre les deux points diamétralement opposés P1, P2 à partir de la longueur Lo et de l'analyse des ondes ultra-sonores reçues par les premiers 16 et seconds 18 moyens à ultra-son après réflexion de ces ondes sur la gaine 12 permettant d'obtenir L1 et L2. La relation permettant d'obtenir ce diamètre extérieur Φext est la suivante :

$$\Phi ext = Lo\text{-}L1\text{-}L2 \qquad (1)$$

Par ailleurs, on détermine un diamètre intérieur Φint de la gaine 12 au moyen du dispositif de contrôle. Ainsi, on mesure les épaisseurs e1, e2 et le diamètre extérieur Φext de la gaine 12 entre deux points diamétralement opposés dans une zone de la gaine 12 ne présentant pas de défaut d'épaisseur. On en déduit alors le diamètre intérieur Φint de la gaine 12 en considérant que, en l'absence de défaut sur la gaine 12, ce dernier est sensiblement constant.

Puis, connaissant e2, Φint, Φext, on déduit e1 (ou e2) par la relation suivante :

$$e1 = \Phi ext - \Phi int - e2 \qquad (2)$$

De préférence, on tient compte, pour la mesure du diamètre extérieur Φext, des variations de température du milieu de contrôle 61 en mesurant le temps de propagation T3 de la troisième onde dans le milieu 61.

En effet, la vitesse de propagation des ondes dépend de la température du milieu de contrôle 61. Une variation de 0.1°C peut entraîner une variation de dix micromètres sur la mesure de Φext et donc de e1 ou e2.

Ainsi, la troisième sonde 56 émet simultanément aux première et deuxième sondes 20 et 22, une troisième onde le long respectivement du troisième trajet. Puis la troisième sonde 56 reçoit cette onde après la rétro-réflexion de cette dernière sur les troisièmes moyens de réflexion 52.

Le temps de propagation T3 est lisible sur le graphique affiché sur l'écran 32 (figure 5). Connaissant la distance d séparant la troisième sonde 56 et les troisièmes moyens de réflexion 52, il est possible de déterminer la vitesse des ondes ultra-sonores dans le milieu de contrôle, pour une température donnée du milieu, grâce à la relation :

$$v = \frac{2d}{T_3} \qquad (3)$$

Puis, on poursuit le contrôle de la gaine 12 sur toute sa hauteur et sa périphérie, en déplaçant le support 56 du dispositif de contrôle 10 de la paire de points P1, P2 diamétralement à une autre paire de points diamétralement opposés par rotation de ce support 56 autour de l'axe de référence Z et/ou par translation de la gaine 12 parallèlement à l'axe de référence Z. On pourra faire par exemple une mesure des épaisseurs e1 et e2 tous les 10° sur 360° et/ou tous les 1 ou 1.25 millimètres parallèlement à l'axe Z.

Par ailleurs, de préférence, avant la mise en place de la gaine 12 dans le milieu pour son contrôle, on étalonne le dispositif de contrôle 10. Pour réaliser l'étalonnage du dispositif 10, on utilise une gaine de référence identique à la gaine 12 devant être contrôlée et ne présentant pas de défaut notable.

Au cours d'une première étape d'étalonnage, on effectue des mesures de référence des caractéristiques dimensionnelles telles que des diamètres intérieur et extérieur, des épaisseurs de la gaine de référence. De préférence, ces mesures de référence sont obtenues au préalable à l'aide de moyens classiques de métrologie de précision.

Puis, au cours d'une deuxième étape d'étalonnage, on introduit la gaine de référence dans le dispositif de contrôle et on mesure les caractéristiques dimensionnelles de cette dernière à l'aide du dispositif.

Enfin, au cours d'une troisième étape d'étalonnage, on compare les valeurs des mesures des caractéristiques dimensionnelles de la gaine de référence obtenues au moyen du dispositif de contrôle avec celles obtenues par métrologie de précision servant de référence d'étalonnage et on détermine un éventuel écart entre ces valeurs. La prise en compte de ces écarts dans les valeurs mesurées à l'aide du dispositif 10 permet d'obtenir un étalonnage relativement précis de ce dernier. Par ailleurs, les étapes d'étalonnage permettent également de déterminer notamment la vitesse des ondes ultra-sonores dans le matériau de la gaine.

## Revendications

**1.** Dispositif (10) de contrôle de dimensions d'un élément tubulaire cylindrique (12), appelé gaine (12), notamment une gaine de crayon (14) d'une grappe de commande pour un coeur de réacteur nucléaire, **caractérisé en ce qu'**il comprend des premiers moyens (16) à ultra-son d'émission-réception d'une première onde ultra-sonore le long d'un premier trajet comportant une partie incidente (34) perpendiculaire à un axe de référence (Z) du dispositif coïncidant avec l'axe de révolution de l'élément tubulaire cylindrique (12) et des deuxièmes moyens (18) à ultra-son d'émission-réception d'une deuxième onde ultra-sonore le long d'un deuxième trajet comportant une partie incidente (40) perpendiculaire à l'axe de référence (Z) et alignée avec la partie incidente (34) du premier trajet, les sens de propagation des première et deuxième ondes étant opposés le long des parties incidentes (34, 40), les premiers (16) et deuxièmes (18) moyens à ultra-son comprenant respectivement des première (20) et deuxième (22) sondes à ultra-son, le dispositif (10) comprenant des moyens de traitement (28) des signaux électriques communs aux deux sondes (20, 22), et le dispositif (10) comprenant en outre des moyens différenciant les temps de propagation des première et deuxième ondes respectivement entre chacune des première (20) et deuxième (22) sondes et ledit axe de référence (Z), de façon que le temps de propagation de la première onde ultra-sonore selon le premier trajet soit plus long que le temps de propagation de la deuxième onde selon le deuxième trajet, afin d'éviter une superposition des signaux électriques émis par les sondes (20, 22) à destination desdits moyens de traitement (28) des signaux électriques.

**2.** Dispositif (10) selon la revendication précédente, dans lequel les moyens de différenciation comprennent des moyens de différenciation des longueurs des premier et deuxième trajets.

**3.** Dispositif (10) selon la revendication 1 ou 2, dans lequel, le dispositif (10) comprenant des moyens (28) de traitement de signaux électriques, les première (20) et deuxième (22) sondes sont destinées à être raccordées en parallèle aux moyens de traitement (28).

**4.** Dispositif (10) selon la revendication précédente, comprenant des moyens (24) formant générateur d'impulsions électriques communs aux premiers (16) et deuxièmes (18) moyens à ultra-son, dans lequel les première (20) et deuxième (22) sondes sont destinées à être raccordées en parallèle aux moyens (24) formant générateur.

**5.** Dispositif (10) selon l'une quelconque des revendications précédentes, comprenant des troisièmes moyens (46) à ultra-son d'émission-réception d'une troisième onde ultra-sonore le long d'un troisième trajet comprenant une partie incidente (48) sensiblement parallèle à l'axe de référence (Z) et une partie rétro-réfléchie (50) coïncidant avec la partie incidente (48).

**6.** Dispositif (10) selon la revendication 5 prise ensemble avec les revendications 3 et 4, dans lequel les moyens (24) formant générateur d'impulsions électriques et les moyens de traitement (28) de signaux électriques sont communs aux troisièmes moyens à ultra-son (46) et dans lequel les troisièmes moyens (46) comprennent une troisième sonde (54) à ultra-son destinée à être raccordée en parallèle avec les première (20) et deuxième (22) sondes à ultra-son aux moyens formant générateur (24) et aux moyens de traitement (28).

**7.** Dispositif (10) selon l'une quelconque des revendications précédentes, dans lequel au moins les premiers (16) et deuxièmes (18) moyens à ultra-son sont portés par un support commun (56), le dispositif (10) comprenant en outre des moyens (57) de déplacement du support (56) en rotation autour de l'axe de référence (Z).

**8.** Procédé de contrôle de dimensions d'un élément tubulaire cylindrique (12), appelé gaine, notamment une gaine de crayon (14) d'une grappe de commande pour un coeur de réacteur nucléaire, la gaine (12) ayant une forme générale de révolution autour d'un axe (Z), dans lequel on place la gaine (12) dans un milieu liquide approprié (61), appelé milieu de contrôle, **caractérisé en ce que** :

- on utilise un dispositif de contrôle (10) selon l'une quelconque des revendications précédentes dans lequel on place les premiers (16) et deuxièmes (18) moyens à ultra-son dans le milieu de contrôle (61),
- on place la gaine (12) dans le milieu de contrôle (61) de façon à faire coïncider sensiblement l'axe de révolution avec l'axe de référence (Z),

- on mesure, en deux points (P1, P2) diamétralement opposés, les deux épaisseurs diamétralement opposées e1 et e2 de la gaine (12) par analyse des ondes ultra-sonores reçues par les premiers (16) et seconds (18) moyens à ultrason après réflexion de ces ondes sur la gaine (12), ces ondes ultra-sonores étant émises simultanément par les premiers (16) et seconds (18) moyens à ultra-son.

9. Procédé selon la revendication 8, dans lequel, le dispositif (10) de contrôle étant selon la revendication 2, préalablement à la mise en place de la gaine (12) dans le milieu de contrôle ou après retrait de cette gaine (12) du milieu de contrôle, on mesure la longueur Lo du trajet des ondes ultra-sonores entre les première (20) et deuxième (22) sondes et on déduit un diamètre extérieur Φext de la gaine (12) entre les deux points diamétralement opposés (P1, P2) à partir de la longueur du trajet Lo et de l'analyse des ondes ultra-sonores reçues par les premiers (16) et seconds (18) moyens à ultra-son après réflexion de ces ondes sur la gaine (12).

10. Procédé selon la revendication 9, dans lequel, lorsque l'analyse des ondes ultra-sonores reçues par les premiers moyens à ultra-son (16) ne permet pas d'aboutir à la mesure de e1, on déduit e1 par la relation suivante : e1 = Φext - Φint - e2, où Φint est un diamètre intérieur de la gaine (12).

11. Procédé selon la revendication 9 ou 10, dans lequel, le dispositif de contrôle (10) étant selon la revendication 6, on tient compte, pour la mesure du diamètre extérieur Φext, des variations de température du milieu de contrôle en mesurant le temps de propagation d'une troisième onde ultra-sonore dans le milieu, cette troisième onde étant émise par les troisièmes moyens à ultra-son (46) le long respectivement du troisième trajet et étant reçue par les troisièmes moyens (46).

12. Procédé selon l'une quelconque des revendications 8 à 11, le dispositif de contrôle (10) étant selon la revendication 2, dans lequel on convertit au moins les première et deuxième ondes reçues en des premier et deuxième signaux électriques et on reçoit les premier et deuxième signaux électriques sur une voie commune (30) de traitement de signaux électriques.

13. Procédé selon l'une quelconque des revendications 8 à 12, le dispositif de contrôle (10) étant selon la revendication 8, dans lequel on déplace le dispositif de contrôle (10) d'une paire de points (P1, P2) diamétralement opposés à une autre paire de points diamétralement opposés par rotation autour de l'axe de référence (Z) et/ou on déplace la gaine (12) verticalement par translation parallèlement à cet axe (Z).

**Patentansprüche**

1. Vorrichtung (10) zum Prüfen von Abmessungen eines zylindrischen rohrförmigen Elements (12), Hülle (12) genannt, insbesondere einer Stabhülle (14) eines Steuerstabbündels für einen Kernreaktorkern, **dadurch gekennzeichnet, dass** sie Folgendes umfasst: erste Ultraschalleinrichtungen (16) zum Senden und Empfangen einer ersten Ultraschallwelle entlang einer ersten Strecke mit einem Einfallsabschnitt (34) senkrecht zu einer Referenzachse (Z) der Vorrichtung, die mit der Rotationsachse des zylindrischen rohrförmigen Elements (12) zusammenfällt, und zweite Ultraschalleinrichtungen (18) zum Senden und Empfangen einer zweiten Ultraschallwelle entlang einer zweiten Strecke mit einem Einfallsabschnitt (40) senkrecht zu der Referenzachse (Z) und in Flucht mit dem Einfallsabschnitt (34) der ersten Strecke, wobei die Ausbreitungsrichtungen der ersten und zweiten Welle entlang der Einfallsabschnitte (34, 40) entgegengesetzt sind, wobei die ersten Ultraschalleinrichtungen (16) und zweiten Ultraschalleinrichtungen (18) eine erste Ultraschallsonde (20) bzw. eine zweite Ultraschallsonde (22) umfassen, wobei die Vorrichtung (10) Einrichtungen zur Verarbeitung (28) der den zwei Sonden (20, 22) gemeinsamen elektrischen Signale umfasst und wobei die Vorrichtung (10) ferner Einrichtungen umfasst, welche die Ausbreitungszeit der ersten und zweiten Welle zwischen jeder der ersten Sonde (20) bzw. zweiten Sonde (22) und der Referenzachse (Z) so differenzieren, dass die Ausbreitungszeit der ersten Ultraschallwelle entlang der ersten Strecke länger ist als die Ausbreitungszeit der zweiten Welle entlang der zweiten Strecke, um eine Überlagerung der elektrischen Signale, die von den Sonden (20, 22) an die Einrichtungen zur Verarbeitung (28) der elektrischen Signale gesendet werden, zu vermeiden.

2. Vorrichtung (10) nach dem vorhergehenden Anspruch, wobei die Differenzierungseinrichtungen Einrichtungen zur Differenzierung der Längen der ersten und zweiten Strecke umfassen.

3. Vorrichtung (10) nach Anspruch 1 oder 2, wobei, da die Vorrichtung (10) Einrichtungen zur Verarbeitung (28) elektrischer Signale umfasst, die erste Sonde (20) und zweite Sonde (22) für den Anschluss parallel zu den Verarbeitungseinrichtungen (28) bestimmt sind.

4. Vorrichtung (10) nach dem vorhergehenden Anspruch, umfassend einen Elektroimpulsgenerator bildende Einrichtungen (24), die den ersten Ultraschalleinrichtungen (16) und zweiten Ultraschalleinrichtungen (18) gemeinsam sind, wobei die erste Sonde (20) und zweite Sonde (22) für den Anschluss parallel zu den einen Generator bildenden Einrichtungen (24) bestimmt sind.

5. Vorrichtung (10) nach einem der vorhergehenden Ansprüche, umfassend dritte Ultraschalleinrichtungen (46) zum Senden und Empfangen einer dritten Ultraschallwelle entlang einer dritten Strecke mit einem Einfallsabschnitt (48) im Wesentlichen parallel zu der Referenzachse (Z) und einen Retroreflexionsabschnitt (50), der mit dem Einfallsabschnitt (48) zusammenfällt.

6. Vorrichtung (10) nach Anspruch 5 zusammen mit den Ansprüchen 3 und 4, wobei die einen Elektroimpulsgenerator bildenden Einrichtungen (24) und die Einrichtungen zur Verarbeitung (28) elektrischer Signale den dritten Ultraschalleinrichtungen (46) gemeinsam sind und wobei die dritten Einrichtungen (46) eine dritte Ultraschallsonde (54) umfassen, die für den Anschluss parallel mit der ersten Ultraschallsonde (20) und zweiten Ultraschallsonde (22) an die einen Generator bildenden Einrichtungen (24) und an die Verarbeitungseinrichtungen (28) bestimmt ist.

7. Vorrichtung (10) nach einem der vorhergehenden Ansprüche, wobei wenigstens die ersten Ultraschalleinrichtungen (16) und zweiten Ultraschalleinrichtungen (18) von einem gemeinsamen Träger (56) getragen werden, wobei die Vorrichtung (10) ferner Einrichtungen (57) für die Bewegung des Trägers (56) in Rotation um die Referenzachse (Z) umfasst.

8. Verfahren zum Prüfen von Abmessungen eines zylindrischen rohrförmigen Elements (12), Hülle genannt, insbesondere einer Stabhülle (14) eines Steuerstabbündels für einen Kernreaktorkern, wobei die Hülle (12) eine allgemeine Rotationsform um eine Achse (Z) hat, wobei bei dem Verfahren die Hülle (12) in einem geeigneten flüssigen Medium (61), Prüfmedium genannt, platziert wird, **dadurch gekennzeichnet, dass**

    - eine Prüfvorrichtung (10) nach einem der vorhergehenden Ansprüche verwendet wird, wobei die ersten Ultraschalleinrichtungen (16) und zweiten Ultraschalleinrichtungen (18) in dem Prüfmedium (61) platziert werden,
    - die Hülle (12) in dem Prüfmedium (61) so platziert wird, dass die Rotationsachse im Wesentlichen mit der Referenzachse (Z) zusammenfällt,
    - an zwei diametral entgegengesetzten Punkten (P1, P2) die zwei diametral entgegengesetzten Dicken e1 und e2 der Hülle (12) durch Analyse der von den ersten Ultraschalleinrichtungen (16) und zweiten Ultraschalleinrichtungen (18) nach Reflexion dieser Wellen an der Hülle (12) empfangenen Ultraschallwellen gemessen werden, wobei diese Ultraschallwellen durch die ersten Ultraschalleinrichtungen (16) und zweiten Ultraschalleinrichtungen (18) gleichzeitig gesendet werden.

9. Verfahren nach Anspruch 8, bei dem, da die Prüfvorrichtung (10) nach Anspruch 2 ausgebildet ist, vor dem Platzieren der Hülle (12) in dem Prüfmedium oder nach dem Entnehmen dieser Hülle (12) aus dem Prüfmedium die Länge Lo der Strecke der Ultraschallwellen zwischen der ersten Sonde (20) und zweiten Sonde (22) gemessen wird und ein Außendurchmesser $\Phi$ext der Hülle (12) zwischen den zwei diametral entgegengesetzten Punkten (P1, P2) ausgehend von der Länge der Strecke Lo und von der Analyse der von den ersten Ultraschalleinrichtungen (16) und zweiten Ultraschalleinrichtungen (18) nach Reflexion dieser Wellen an der Hülle (12) empfangenen Ultraschallwellen hergeleitet wird.

10. Verfahren nach Anspruch 9, bei dem, wenn die Analyse der von den ersten Ultraschalleinrichtungen (16) empfangenen Ultraschallwellen nicht gestattet, zu der Messung von e1 zu gelangen, e1 über die folgende Beziehung hergeleitet wird: e1 = $\Phi$ext - $\Phi$int -e2, wobei $\Phi$int ein Innendurchmesser der Hülle (12) ist.

11. Verfahren nach Anspruch 9 oder 10, bei dem, da die Prüfvorrichtung (10) nach Anspruch 6 ausgebildet ist, bei der Messung des Außendurchmessers $\Phi$ext Temperaturschwankungen des Prüfmediums berücksichtigt werden, indem die Ausbreitungszeit einer dritten Ultraschallwelle in dem Medium gemessen wird, wobei diese dritte Welle von den dritten Ultraschalleinrichtungen (46) entlang der dritten Strecke gesendet wird bzw. von den dritten Einrichtungen (46) empfangen wird.

12. Verfahren nach einem der Ansprüche 8 bis 11, wobei die Prüfvorrichtung (10) nach Anspruch 2 ausgebildet ist, bei dem wenigstens die erste und zweite empfangene Welle in erste und zweite elektrische Signale umgewandelt werden und das erste und zweite elektrische Signal auf einem gemeinsamen Pfad (30) zur Verarbeitung elektrischer Signale empfangen werden.

13. Verfahren nach einem der Ansprüche 8 bis 12, wobei die Prüfvorrichtung (10) nach Anspruch 8 ausgebildet ist, bei dem die Prüfvorrichtung (10) von einem Paar diametral entgegengesetzter Punkte (P1, P2) zu einem anderen Paar diametral entgegengesetzter Punkte durch Rotation um die Referenzachse (Z) bewegt wird und/oder die Hülle (12) vertikal durch Translation parallel zu dieser Achse (Z) bewegt wird.

**Claims**

1. Device (10) for inspecting the dimensions of a cylindrical tubular element (12), namely a sheath (12), in particular a sheath of a rod (14) of a control cluster for a nuclear reactor core, **characterised in that** it comprises first ultra-sound means (16) for transmitting-receiving a first ultra-sound wave along a first path having an incident part (34) perpendicular to a reference axis (Z) of the device coinciding with the axis of revolution of the cylindrical tubular element (12) and second ultra-sound means (18) for transmitting-receiving a second ultra-sound wave along a second path having an incident part (40) perpendicular to the reference axis (Z) and aligned with the incident part (34) of the first path, the propagation directions of the first and second waves being opposite along the incident parts (34, 40), the first (16) and second (18) ultra-sound means respectively comprising first (20) and second (22) ultra-sound probes, the device (10) comprising means (28) for processing electric signals common to the two probes (20, 22), and the device (10) further comprising means for differentiating the propagation times of the first and second waves respectively between each of the first (20) and second (22) probes and said reference axis (Z) so that the propagation time of the first ultra-sound wave along the first path is longer than the propagation time of the second wave along the second path in order to prevent electric signals transmitted by the probes (20, 22) to said means (28) for processing electric signals from being superimposed.

2. Device (10) as claimed in the preceding claim, wherein the differentiating means comprise means for differentiating lengths of the first and second paths.

3. Device (10) as claimed in claim 1 or 2, wherein the device (10) comprises means (28) for processing electric signals and the first (20) and second (22) probes are designed to be connected to the processing means (28) in parallel.

4. Device (10) as claimed in the preceding claim comprising means (24) serving as an electric pulse generator common to the first (16) and second (18) ultra-sound means, wherein the first (20) and second (22) probes are designed to be connected to the means (24) serving as a generator in parallel.

5. Device (10) as claimed in any one of the preceding claims, comprising third ultra-sound means (46) for transmitting-receiving a third ultra-sound wave along a third path having an incident part (48) substantially parallel with the reference axis (Z) and a retro-reflected part (50) coinciding with the incident part (48).

6. Device (10) as claimed in claim 5 in conjunction with claims 3 and 4, wherein the means (24) serving as an electric pulse generator and the means (28) for processing electric signals are common to the third ultra-sound means (46) and wherein the third means (46) comprise a third ultra-sound probe (54) designed to be connected to the means (24) serving as a generator and to the processing means (28) in parallel with the first (20) and second (22) ultra-sound probes.

7. Device (10) as claimed in any one of the preceding claims, wherein at least the first (16) and second (18) ultra-sound means are mounted on a common support (56), the device (10) further comprising means (57) for displacing the support (56) in rotation about the reference axis (Z).

8. Method for inspecting the dimensions of a cylindrical tubular element (12), namely a sheath, in particular a sheath of a rod (14) of a control cluster for a nuclear reactor core, the sheath (12) having a general shape of revolution about an axis (Z), wherein the sheath (12) is placed in an appropriate liquid medium (61), namely an inspection medium, **characterised in that**:

   - an inspection device (10) as claimed in any one of the preceding claims is used and the first (16) and second (18) ultra-sound means are placed in the inspection medium (61),
   - the sheath (12) is placed in the inspection medium (61) so that the axis of revolution substantially coincides with the reference axis (Z),
   - at two diametrically opposite points (P1, P2), the two diametrically opposite thicknesses e1 and e2 of the sheath (12) are measured by analysing ultra-sound waves received by the first (16) and second (18) ultra-sound means after reflection of these waves on the sheath (12), these ultra-sound waves being emitted simultaneously by the first (16) and second (18) ultra-sound means.

9. Method as claimed in claim 8, wherein, the inspection device (10) being as claimed in claim 2, prior to placing the sheath (12) in the inspection medium or after removing this sheath (12) from the inspection medium, the length Lo of the path of the ultra-sound waves between the first (20) and second (22) probes is measured and an external diameter $\Phi$ext of the sheath (12) between the two diametrically opposite points (P1, P2) is derived from the length Lo of the path and the analysis of the ultra-sound waves received by the first (16) and second (18) ultra-sound means after reflection of these waves on the sheath (12).

10. Method as claimed in claim 9, wherein, if the analysis of the ultra-sound waves received by the first ultra-sound means (16) does not enable e1 to be measured, e1 is derived by the following equation: e1 = Φext - Φint - e2, where Φint is an internal diameter of the sheath (12).

11. Method as claimed in claim 9 or 10, wherein, the inspection device (10) being as claimed in claim 6, in measuring the external diameter Φext, temperature variations in the inspection medium are taken into account by measuring the propagation time of a third ultra-sound wave in the control medium, this third wave being emitted by the third ultra-sound means (46) respectively along the third path and being received by the third means (46).

12. Method as claimed in any one of claims 8 to 11, the inspection device (10) being as claimed in claim 2, wherein at least the first and second waves received are converted into first and second electric signals and the first and second electric signals are received on a common electric signal processing channel (30).

13. Method as claimed in any one of claims 8 to 12, the inspection device (10) being as claimed in claim 8, wherein the inspection device (10) is moved from one pair of diametrically opposite points (P1, P2) to another pair of diametrically opposite points by a rotation about the reference axis (Z) and/or the sheath (12) is moved vertically in translation parallel with this axis (Z).

**Fig. 1**

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0812459 A
- EP 0716301 A
- US 3828609 A
- US 2004255677 A1
- US 4502330 A